# EUROPÄISCHE PATENTSCHRIFT

(11) **EP 2 931 770 B1**
(45) Veröffentlichungstag und Bekanntmachung des Hinweises auf die Patenterteilung: **14.08.2019**
(21) Anmeldenummer: 13811861.7
(22) Anmeldetag: 13.12.2013
(51) Int. Cl.: C08G 18/08, C08G 18/10, C08G 18/12, C08L 75/04

(54) **NIEDERMODULIGE SILANTERMINIERTE POLYURETHANE**
LOW-MODULUS SILYLATED POLYURETHANES
POLYURÉTHANES À TERMINAISONS SILANE ET FAIBLE MODULE

(30) Priorität: 17.12.2012 DE 102012223422
(43) Veröffentlichungstag der Anmeldung: 21.10.2015
(73) Patentinhaber: Henkel AG & Co. KGaA, 40589 Düsseldorf (DE)
(72) Erfinder: ZANDER, Lars, 84503 Altötting (DE); LOTH, Helmut, 42781 Haan (DE); BURMEISTER, Marc Pascal, 41352 Korschenbroich (DE); TENHAEF, Rolf, 40627 Düsseldorf (DE); KLEIN, Johann, 40593 Düsseldorf (DE); DAMKE, Jan-Erik, 40591 Düsseldorf (DE)
(86) Internationale Anmeldenummer: PCT/EP2013/076582
(87) Internationale Veröffentlichungsnummer: WO 2014/095650

(56) Entgegenhaltungen:
- EP-A1- 0 931 800
- EP-A1- 2 103 648
- EP-A1- 2 143 746
- DE-A1-102007 058 483

## Beschreibung

Die vorliegende Erfindung betrifft das Gebiet der silylierten Polyurethane, wie sie beispielsweise in Kleb-, Dicht- und Beschichtungsstoffen verwendet werden. Insbesondere schlägt die Erfindung ein neues Verfahren zur Herstellung silylierter Polyurethane vor. Die Erfindung betrifft ferner ein aus einem erfindungsgemäßen Verfahren resultierendes Polyurethan sowie eine härtbare Zusammensetzung, die ein derartiges Polyurethan enthält. Schließlich betrifft die Erfindung die Verwendung einer solchen Zusammensetzung als Kleb-, Dicht- und/oder Beschichtungsstoff.

Einkomponentige, feuchtigkeitshärtende Kleb- und Dichtstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon- Kleb- und Dichtstoffen auf der Basis von Dimethylpolysiloxanen sind in letzter Zeit auch verstärkt die so genannten silanmodifizierten Kleb- und Dichtstoffe eingesetzt worden. Gegenüber den Polyurethan-Kleb- und Dichtstoffen weisen die silanmodifizierten Kleb- und Dichtstoffe den Vorteil auf, dass sie frei von Isocyanatgruppen, insbesondere von monomeren Diisocyanaten, sind. Ferner zeichnen sie sich durch ein breites Haftspektrum auf einer Vielzahl von Substraten ohne Oberflächenvorbehandlung durch Primer aus.

Polymersysteme, die über reaktive Silylgruppen verfügen, sind also prinzipiell bekannt. In Gegenwart von Luftfeuchtigkeit sind Polymere, die über Silylgruppen mit hydrolysierbaren Substituenten verfügen, bereits bei Raumtemperatur in der Lage, unter Abspaltung der hydrolysierten Reste miteinander zu kondensieren. Je nach Gehalt an Silylgruppen mit hydrolysierbaren Substituenten und dem Aufbau dieser Silylgruppen bilden sich dabei hauptsächlich langkettige Polymere (Thermoplaste), relativ weitmaschige, dreidimensionale Netzwerke (Elastomere) oder hochvernetzte Systeme (Duroplaste). Die Polymere weisen in der Regel ein organisches Grundgerüst auf, das an den Enden zum Beispiel Alkoxy- oder Acyloxysilylgruppen trägt. Bei dem organischen Grundgerüst kann es sich beispielsweise um Polyurethane, Polyester, Polyether etc. handeln.

EP 0 931 800 A1 beschreibt die Herstellung silylierter Polyurethane durch Reaktion einer Polyol-Komponente mit niedriger terminaler Ungesättigtheit mit einer DiisocyanatKomponente zu einem Hydroxy-terminierten Präpolymer, das anschließend mit einem Isocyanatosilan verkappt wird. Die auf diese Weise erhaltenen Polyurethane zeichnen sich durch gute mechanische Eigenschaften bei akzeptablen Aushärtungszeiten aus.

Das Verkappen von Polyurethan-Präpolymeren, die reaktive terminale Wasserstoffatome enthalten, mit Isocyanatosilanen, die mindestens eine hydrolysierbare Alkoxy-Gruppe am Siliziumatom tragen, ist auch Gegenstand von EP 0 070 475 A2. Die auf diese Weise erhaltenen feuchtigkeitshärtbaren Polymere können vorteilhaft in Dichtmassen eingesetzt werden.

WO 2009/071542 A1 beschreibt ein Verfahren zur Herstellung eines silylierten Polyurethans, welches die Umsetzung mindestens einer Polyolverbindung mit einem Molekulargewicht von 4.000 bis 30.000 g/mol und mindestens einer gegenüber Isocyanaten monofunktionellen Verbindung mit mindestens einem Diisocyanat umfasst. Dabei besteht ein Überschuss der Summe aus Polyolverbindungen und monofunktionellen Verbindungen gegenüber den Diisocyanaten, so dass ein Hydroxy-terminiertes Polyurethan-Präpolymer gebildet wird, das in der Folge mit Isocyanatosilan umgesetzt wird. Das Dokument EP 2 143 746 A1 offenbart ein Verfahren zur Herstellung eines silylierten Polyurethans in Anwesenheit eines Lösemittels, das einen niedrigen E-Modul und eine hohe Dehnung aufweist (siehe Tabelle 1).

Es besteht ein anhaltender Bedarf an isocyanatfreien Zusammensetzungen zur Verwendung in Kleb- und/oder Dichtstoffen, die akzeptable Härtungszeiten und gute mechanische Eigenschaften nach der Aushärtung aufweisen. Beispielsweise ist es für viele Anwendungen vorteilhaft, wenn die Zusammensetzungen nach dem Aushärten eine gute Dehnbarkeit bei gleichzeitig hoher Rückstellkraft besitzen.

Aufgabe der vorliegenden Erfindung ist es daher, Zusammensetzungen zur Verfügung zu stellen, die nach dem Aushärten eine gute Dehnbarkeit, wie sie sich in hoher Bruchdehnung und einem möglichst niedrigen E-Modul äußert, in Verbindung mit hoher Rückstellkraft aufweisen.

Die Aufgabe wird durch Zusammensetzungen gelöst, die auf silylierten Polyurethanen basieren, die nach einem speziellen Verfahren hergestellt werden. Ein erster Gegenstand der vorliegenden Erfindung ist daher ein Verfahren zur Herstellung eines silylierten Polyurethans, das die folgenden Schritte umfasst:
(1) Umsetzen
   mindestens eines Polyetherpolyols mit einem zahlenmittleren Molekulargewicht von mindestens 5.000 g/mol, vorzugsweise mindestens 15.000 g/mol, mit mindestens einem Polyisocyanat
   in Gegenwart mindestens eines Lösungsmittels;
(2) Umsetzen
   des Reaktionsproduktes aus Schritt (1) mit mindestens einem Silan der Formel (I)

   A-R-SiXYZ (I),

   worin A-NH₂ oder -NHB bedeutet, wobei B für einen verzweigten oder linearen Alkylrest mit 1 - 12 C-Atomen, einen linearen, funktionelle Gruppen, beispielsweise eine oder mehrere Ester-, Ether- oder Amidgruppen, aufweisenden Alkylrest mit 1 - 12 C-Atomen, einen cyclischen Alkylrest mit 5 - 8 C-Atomen, oder einen Arylrest, vorzugsweise mit 6 - 10 C-Atomen, steht,
   R ein zweibindiger Kohlenwasserstoffrest mit 1 - 12 C-Atomen ist und
   X, Y, Z Substituenten am Si-Atom und unabhängig voneinander C₁ - C₈ - Alkyl-, C₁ - C₈ - Alkoxy- oder C₁ - C₈ - Acyloxygruppen sind, wobei mindestens einer der Reste X, Y, Z eine C₁ - C₈ - Alkoxy- oder C₁ - C₈ - Acyloxygruppe ist,
   in Gegenwart mindestens eines Lösungsmittels,
wobei das Lösemittel eine aromatische Verbindung ist.

Unter einem "Polyurethan" wird erfindungsgemäß ein Polymer verstanden, das mindestens zwei Urethan-Gruppierungen -NH-CO-O- aufweist, die Abschnitte des Makromoleküls miteinander verbinden.

Der Begriff "Umsetzen" bedeutet erfindungsgemäß das Inkontaktbringen bestimmter Substanzen derart, dass diese Substanzen eine chemische Reaktion miteinander eingehen, wobei die Substanzen selbstverständlich derart beschaffen sind, dass eine chemische Reaktion stattfinden kann.

Unter einem "Polyol" wird erfindungsgemäß ein Polymer verstanden, das mindestens zwei OH-Gruppen aufweist. Als Polyol kann prinzipiell eine Vielzahl von mindestens zwei OH-Gruppen tragenden Polymeren bezeichnet werden, beispielsweise Polyester, speziell zum Beispiel Polycaprolactone, ferner Polybutadiene oder Polyisoprene, sowie deren Hydrierungsprodukte oder auch Polyacrylate und/oder Polymethacrylate. Es können auch Mischungen verschiedener Polyole umfasst sein.

Erfindungsgemäß wird als Polyol ein Polyetherpolyol eingesetzt. Unter einem Polyether wird ein Polymer verstanden, dessen organische Wiederholungseinheiten Ether-Funktionalitäten C-O-C in der Hauptkette enthalten. Nicht zu den Polyethern werden damit Polymere mit seitenständigen Ether-Gruppen gerechnet, wie zum Beispiel die Celluloseether, Stärkeether und Vinylether-Polymere. Auch Polyacetale wie das Polyoxymethylen (POM) werden nicht zu den Polyethern gezählt.

Polyether weisen eine flexible und elastische Struktur auf, mit der man Zusammensetzungen herstellen kann, die hervorragende elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt.

In einer bevorzugten Ausführungsform der vorliegenden Erfindung ist das Polyol ein Polyalkylenoxid, besonders bevorzugt Polyethylenoxid und/oder Polypropylenoxid.

Besonders vorteilhafte viskoelastische Eigenschaften lassen sich erreichen, wenn man Polyether, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Auf diese Art hergestellte Polyether zeichnen sich durch eine besonders enge Molmassenverteilung, durch eine hohe mittlere Molmasse und durch eine sehr niedrige Zahl an Doppelbindungen an den Enden der Polymerketten aus.

In einer speziellen Ausführungsform der vorliegenden Erfindung ist das Polyol daher ein Polyetherpolyol, dessen maximale Polydispersität M_{w}/Mₙ 3, besonders bevorzugt 1,7, beispielsweise 1,5 und ganz besonders bevorzugt 1,3 beträgt.

Erfindungsgemäß beträgt das zahlenmittlere Molekulargewicht des Polyols mindestens 5.000 g/mol, weiter bevorzugt mindestens 10.000 g/mol, besonders bevorzugt mindestens 15.000 g/mol und ganz besonders bevorzugt mindestens 16.000 g/mol. Das zahlenmittlere Molekulargewicht Mₙ wird, ebenso wie das gewichtsmittlere Molekulargewicht M_{w}, erfindungsgemäß durch Gelpermeationschromatographie (GPC, auch: SEC) gegen einen Polystyrolstandard bestimmt. Dieses Verfahren ist dem Fachmann bekannt. Die Polydispersität leitet sich aus den mittleren Molekulargewichten M_{w} und Mₙ ab. Sie wird berechnet als PD = M_{w}/Mₙ.

Das Verhältnis M_{w}/Mₙ (Polydispersität) gibt die Breite der Molmassenverteilung und damit der unterschiedlichen Polymerisationsgrade der einzelnen Ketten bei polydispersen Polymeren an. Für viele Polymerisate und Polykondensate gilt für die Polydispersität ein Wert von etwa 2. Strenge Monodispersität wäre bei einem Wert von 1 gegeben. Eine geringe Polydispersität von beispielsweise kleiner als 1,5 deutet auf eine vergleichsweise enge Molekulargewichtsverteilung und damit auf eine spezifische Ausprägung mit dem Molekulargewicht zusammenhängender Eigenschaften, wie zum Beispiel der Viskosität, hin. Vorzugsweise hat das Polyol ein zahlenmittleres Molekulargewicht von 5.000 bis 30.000 g/mol. Derartige Molekulargewichte sind besonders vorteilhaft, da die resultierenden Polyurethane beziehungsweise die auf ihnen basierenden Zusammensetzungen ein ausgewogenes Verhältnis von Viskosität (leichte Verarbeitbarkeit) vor dem Aushärten und Festigkeit und Elastizität nach dem Aushärten aufweisen. In einer ersten Ausführungsform beträgt das zahlenmittlere Molekulargewicht vorzugsweise von 5.000 bis 15.000 g/mol, insbesondere von 5.000 bis 12.000 g/mol. In einer zweiten Ausführungsform beträgt das zahlenmittlere Molekulargewicht vorzugsweise 16.000 bis 30.000 g/mol, insbesondere 17.500 bis 24.000 g/mol.

Unter einem Polyisocyanat wird erfindungsgemäß eine Verbindung verstanden, die mindestens zwei Isocyanatgruppen -NCO aufweist. Diese Verbindung muss kein Polymer sein, vielmehr handelt es sich häufig um eine niedermolekulare Verbindung. Bevorzugt ist das Polyisocyanat ein Diisocyanat.

Als Diisocyanate eignen sich im Rahmen des erfindungsgemäßen Verfahrens beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder-1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) sowie deren Isomerengemische. Weiterhin kommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder - 2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Diisocyanate der Dimerfettsäuren, oder Gemische aus zwei oder mehr der genannten Diisocyanate in Frage.

Erfindungsgemäß bevorzugt besteht ein stöchiometrischer Überschuss an NCO-Gruppen (-NCO) der Polyisocyanate gegenüber den Hydroxy-Gruppen (-OH) der Polyole, wobei "der Polyole" und "der Polyisocyanate" jeweils auch das Vorliegen nur eines Polyols und/oder nur eines Polyisocyanats mit umfasst. Dieser stöchiometrische Überschuss muss unter den Verfahrensbedingungen bestehen, das heißt es genügt nicht, dass der Überschuss nominell zwar vorliegt, ein Teil der NCO-Gruppen der Polyisocyanate jedoch mit anderen Reaktanden als den OH-Gruppen der Polyole - beispielsweise mit monofunktionellen Alkoholen - abreagiert, so dass de facto ein Unterschuss an NCO-Gruppen der Polyisocyanate gegenüber den OH-Gruppen der Polyole besteht. Besonders bevorzugt beträgt das Verhältnis Anzahl der OH-Gruppen der Polyole : Anzahl der NCO-Gruppen der Polyisocyanate 1 : 3 bis 1 : 1,1, insbesondere 1 : 2,5 bis 1 : 1,5.

Unter einem "Lösemittel" oder auch gleichbedeutend "Lösungsmittel" wird eine Flüssigkeit (Raumtemperatur) verstanden, die andere gasförmige, flüssige oder feste Stoffe auf physikalischem Wege in Lösung zu bringen vermag, ohne mit diesen chemisch zu reagieren. Im Rahmen des erfindungsgemäßen Verfahrens umfasst der Begriff "Lösemittel" auch eine Substanz, die gewöhnlich als "Weichmacher" bezeichnet wird, sofern eine solche Substanz die jeweiligen Reaktanden des Schrittes (1) beziehungsweise des Schrittes (2) des erfindungsgemäßen Verfahrens zu lösen vermag und ihre Reaktion miteinander ermöglicht, ohne selbst chemisch umgesetzt zu werden. Das Lösemittel ist eine aromatische Verbindung oder ein Gemisch verschiedener aromatischer Verbindungen, beispielsweise substituiertes oder unsubstituiertes Benzol, Toluol und/oder Xylol. Besonders bevorzugt ist das Lösemittel eine Alkyl-substituierte aromatische Verbindung und/oder ein Gemisch verschiedener Alkyl-substituierter aromatischer Verbindungen, insbesondere bevorzugt C₁₀-C₂₀-Alkylsubstituiertes Benzol. Das Lösemittel liegt in Schritt (1) und Schritt (2) des erfindungsgemäßen Verfahrens bevorzugt zu einem Anteil von 10 - 40 Gew.-%, bezogen auf das Gesamtgewicht der in Schritt (1) beziehungsweise in Schritt (2) des erfindungsgemäßen Verfahrens eingesetzten Reaktanden, vor. Die Menge an Lösemittel kann in Schritt (1) und Schritt (2) des erfindungsgemäßen Verfahrens gleich oder unterschiedlich sein. Ebenso kann/können in Schritt (1) ein anderes/andere Lösemittel zum Einsatz gelangen als in Schritt (2). Vorzugsweise wird jedoch Schritt (2) unmittelbar im Anschluss an Schritt (1), das heißt ohne zwischenzeitliche Aufarbeitung, durchgeführt, so dass das Silan der Formel (I) zu der aus Schritt (1) resultierenden Lösung gegeben wird.

Erfindungsgemäß wird das Reaktionsprodukt aus Schritt (1) des erfindungsgemäßen Verfahrens mit mindestens einem Silan der Formel (I)

A-R-SiXYZ (I),

worin A -NH₂ oder-NHB bedeutet, wobei B für einen verzweigten oder linearen Alkylrest mit 1 - 12 C-Atomen, einen linearen, funktionelle Gruppen, beispielsweise eine oder mehrere Ester-, Ether- oder Amidgruppen, aufweisenden Alkylrest mit 1 - 12 C-Atomen, einen cyclischen Alkylrest mit 5 - 8 C-Atomen, oder einen Arylrest, vorzugsweise mit 6 - 10 C-Atomen, steht,
R ein zweibindiger Kohlenwasserstoffrest mit 1 - 12 C-Atomen ist und
X, Y, Z Substituenten am Si-Atom und unabhängig voneinander C₁ - C₈ - Alkyl-, C₁ - C₈ - Alkoxy- oder C₁ - C₈ - Acyloxygruppen sind, wobei mindestens einer der Reste X, Y, Z eine C₁ - C₈ - Alkoxy- oder C₁ - C₈ - Acyloxygruppe ist, umgesetzt.

Bevorzugt bedeutet A in der Formel (I) -NHB, d.h. A steht für einen sekundären Aminrest. In diesem Fall handelt es sich bei dem Silan der Formel (I) um ein so genanntes substituiertes Aminosilan.

Der Rest R ist ein zweibindiger Kohlenwasserstoffrest mit 1 bis 12 C-Atomen. Bei dem Kohlenwasserstoffrest handelt es sich bevorzugt um einen geradkettigen, verzweigten oder cyclischen Alkylenrest. Der Kohlenwasserstoffrest kann gesättigt oder ungesättigt sein. R ist besonders bevorzugt ein zweibindiger Kohlenwasserstoffrest mit 1 bis 6 C-Atomen. Über die Länge der Kohlenwasserstoffreste, die eines der Bindeglieder beziehungsweise das Bindeglied zwischen Polymergerüst und Silylrest bilden, kann die Aushärtungsgeschwindigkeit der Zusammensetzung beeinflusst werden. Ganz besonders bevorzugt ist R eine Methylen-, Ethylen- oder n-Propylengruppe, insbesondere ein Methylen- oder n-Propylenrest. Alkoxysilan-terminierte Polymere mit einer Methylengruppe als Bindeglied zum Polymergerüst - sogenannte α-Silane - weisen eine besonders hohe Reaktivität der abschließenden Silylgruppe auf, was zu verkürzten Abbindezeiten und damit zu einer sehr schnellen Aushärtung von Formulierungen auf der Basis solcher Polymere führt. Generell führt eine Verlängerung der verbindenden Kohlenwasserstoffkette zu einer verminderten Reaktivität der Polymere. Insbesondere die γ-Silane - sie enthalten den unverzweigten Propylenrest als Bindeglied - weisen ein ausgewogenes Verhältnis zwischen nötiger Reaktivität (akzeptable Aushärtungszeiten) und verzögerter Aushärtung (offene Zeit, Möglichkeit zur Korrektur nach erfolgter Verklebung) auf. Durch ein bewusstes Kombinieren von α- und γ-Alkoxysilanterminierten Bausteinen kann somit die Aushärtungsgeschwindigkeit der Systeme wunschgemäß beeinflusst werden.

Die mit dem Si-Atom direkt verbundenen Substituenten X, Y und Z sind unabhängig voneinander C₁ - C₈ - Alkylreste, C₁ - C₈ - Alkoxyreste oder C₁ - C₈ - Acyloxyreste. Dabei muss mindestens einer der Reste X, Y, Z eine hydrolysierbare Gruppe, das heißt ein C₁ - C₈ - Alkoxyrest oder ein C₁ - C₈ - Acyloxyrest sein. Als hydrolysierbare Gruppen werden vorzugsweise Alkoxygruppen, insbesondere Methoxy-, Ethoxy-, i-Propyloxy- und i-Butyloxygruppen, gewählt. Dies ist vorteilhaft, da bei der Aushärtung Alkoxygruppen enthaltender Zusammensetzungen keine die Schleimhäute reizenden Stoffe freigesetzt werden. Die durch Hydrolyse der Reste gebildeten Alkohole sind in den freigesetzten Mengen unbedenklich und verdunsten. Daher eignen sich solche Zusammensetzungen insbesondere für den Heimwerkerbereich. Als hydrolysierbare Gruppen können jedoch auch Acyloxygruppen, wie beispielsweise eine Acetoxygruppe -O-CO-CH₃, verwendet werden.

Das/die resultierenden alkoxy- und/oder acyloxysilanterminierte(n) Polymer(e) weist/weisen bevorzugt mindestens zwei aus der Abreaktion des/der Silans/Silane der Formel (I) resultierende Endgruppen auf. Jede Polymerkette enthält damit mindestens zwei Verknüpfungsstellen, an denen sich unter Abspaltung der hydrolysierten Reste in Gegenwart von Luftfeuchtigkeit die Kondensation der Polymere vollziehen kann. Auf diese Weise wird eine regelmäßige und schnelle Vernetzbarkeit erreicht, so dass Verklebungen mit guten Festigkeiten erhalten werden können. Darüber hinaus lässt sich über die Menge und den Aufbau der hydrolysierbaren Gruppen - zum Beispiel durch Verwendung von Di- oder Trialkoxysilylgruppen, Methoxygruppen oder längeren Resten - die Ausgestaltung des erzielbaren Netzwerks als langkettiges System (Thermoplaste), relativ weitmaschiges dreidimensionales Netzwerk (Elastomere) oder hochvernetztes System (Duroplaste) steuern, so dass damit unter anderem die Elastizität, die Flexibilität und die Hitzebeständigkeit der fertig vernetzten Zusammensetzungen beeinflusst werden können.

Bevorzugt ist X eine Alkylgruppe und Y und Z sind jeweils unabhängig voneinander eine Alkoxygruppe, oder X, Y und Z sind jeweils unabhängig voneinander eine Alkoxygruppe. Generell verfügen Polymere, die Di- beziehungsweise Trialkoxysilylgruppen enthalten, über hoch reaktive Verknüpfungsstellen, die ein schnelles Aushärten, hohe Vernetzungsgrade und damit gute Endfestigkeiten ermöglichen. Der besondere Vorteil von Dialkoxysilylgruppen liegt darin, dass die entsprechenden Zusammensetzungen nach der Aushärtung elastischer, weicher und flexibler sind als Trialkoxysilylgruppen enthaltende Systeme. Sie sind deshalb insbesondere für eine Anwendung als Dichtstoffe geeignet. Darüber hinaus spalten sie bei der Aushärtung noch weniger Alkohol ab und sind deshalb besonders interessant, wenn die Menge an freigesetztem Alkohol reduziert werden soll.

Mit Trialkoxysilylgruppen hingegen lässt sich ein höherer Vernetzungsgrad erreichen, was besonders vorteilhaft ist, wenn nach der Aushärtung eine härtere, festere Masse gewünscht wird. Darüber hinaus sind Trialkoxysilylgruppen reaktiver, vernetzen also schneller und senken somit die benötigte Menge an Katalysator, und sie weisen Vorteile beim "kalten Fluss" - der Formstabilität eines entsprechenden Klebstoffs unter dem Einfluss von Kraft- und gegebenenfalls Temperatureinwirkung - auf.

Besonders bevorzugt sind die Reste X, Y und Z in der Formel (I) jeweils unabhängig voneinander eine Methyl-, eine Ethyl-, eine Methoxy- oder eine Ethoxygruppe, wobei mindestens einer der Reste eine Methoxy- oder Ethoxygruppe ist. Methoxy- und Ethoxygruppen als vergleichsweise kleine hydrolysierbare Gruppen mit geringem sterischen Anspruch sind sehr reaktiv und ermöglichen somit ein schnelles Aushärten auch bei geringem Katalysatoreinsatz. Sie sind deshalb insbesondere für Systeme interessant, bei denen ein schnelles Aushärten erwünscht ist, wie beispielsweise bei Klebstoffen, die eine hohe Anfangshaftung aufweisen sollen.

Besonders bevorzugt sind X, Y und Z jeweils unabhängig voneinander eine Methyl- oder eine Methoxygruppe, wobei mindestens einer der Reste eine Methoxy-Gruppe ist. Verbindungen mit Alkoxysilylgruppen weisen je nach Natur der Alkylreste am Sauerstoffatom unterschiedliche Reaktivitäten bei chemischen Reaktionen auf. Dabei zeigt innerhalb der Alkoxygruppen die Methoxygruppe die größte Reaktivität. Auf derartige Silylgruppen kann also zurückgegriffen werden, wenn eine besonders schnelle Aushärtung gewünscht wird. Höhere aliphatische Reste wie Ethoxy bewirken eine im Vergleich zu Methoxygruppen bereits geringere Reaktivität der terminalen Alkoxysilylgruppe und können vorteilhaft zur Ausprägung abgestufter Vernetzungsgeschwindigkeiten eingesetzt werden.

Interessante Gestaltungsmöglichkeiten eröffnen auch Kombinationen beider Gruppen. Wird zum Beispiel für X Methoxy und für Y Ethoxy innerhalb derselben Alkoxysilylgruppe gewählt, kann die gewünschte Reaktivität der abschließenden Silylgruppen besonders feinstufig eingestellt werden, falls ausschließlich Methoxygruppen tragende Silylgruppen als zu reaktiv und die Ethoxygruppen tragenden Silylgruppen für den Einsatzzweck als zu träge empfunden werden.

Neben Methoxy- und Ethoxygruppen können selbstverständlich auch größere Reste als hydrolysierbare Gruppen eingesetzt werden, die naturgemäß eine geringere Reaktivität aufweisen. Dies ist besonders dann von Interesse, wenn auch über die Ausgestaltung der Alkoxygruppen eine verzögerte Aushärtung erreicht werden soll.

Ein weiterer Gegenstand der vorliegenden Erfindung ist ein silyliertes Polyurethan, das durch das erfindungsgemäße Verfahren herstellbar ist. Mit einem erfindungsgemäßen silylierten Polyurethan lassen sich Zusammensetzungen herstellen, die sich durch hervorragende Dehnbarkeit bei hoher Rückstellkraft auszeichnen.

Ein weiterer Gegenstand der vorliegenden Anmeldung ist eine härtbare Zusammensetzung, die mindestens ein erfindungsgemäßes silyliertes Polyurethan und mindestens einen Füllstoff enthält. Unter einer "Zusammensetzung" wird im Rahmen der vorliegenden Erfindung ein Gemisch von mindestens zwei Inhaltsstoffen verstanden.

Der Begriff "härtbar" ist dahingehend zu verstehen, dass die Zusammensetzung unter dem Einfluss äußerer Bedingungen, insbesondere unter dem Einfluss in der Umgebung vorhandener und/oder bewusst zugeführter Feuchtigkeit aus einem relativ weichen, gegebenenfalls plastisch verformbaren Zustand in einen härteren Zustand übergehen kann. Allgemein kann die Vernetzung durch chemische und/oder physikalische Einflüsse erfolgen, neben der bereits erwähnten Feuchtigkeit also beispielsweise auch durch Zuführung von Energie in Form von Wärme, Licht oder sonstiger elektromagnetischer Strahlung, aber auch durch einfaches Inkontaktbringen der Zusammensetzung mit Luft oder einer reaktiven Komponente.

Das bereits in Schritt (2) und gegebenenfalls auch in Schritt (1) des erfindungsgemäßen Verfahrens verwendete Lösemittel kann, sofern es bis zur Herstellung der erfindungsgemäßen Zusammensetzung nicht entfernt wird, in dieser weichmachend wirken.

Vorzugsweise wird das Lösemittel nicht entfernt, so dass die erfindungsgemäße härtbare Zusammensetzung vorzugsweise mindestens ein Lösemittel enthält. Es handelt sich bei dem Lösemittel um eine aromatische Verbindung oder ein Gemisch verschiedener aromatischer Verbindungen, beispielsweise substituiertes oder unsubstituiertes Benzol, Toluol und/oder Xylol. Besonders bevorzugt ist das Lösemittel eine Alkyl-substituierte aromatische Verbindung und/oder ein Gemisch verschiedener Alkyl-substituierter aromatischer Verbindungen, insbesondere bevorzugt ein C₁₀-C₂₀-Alkyl-substituiertes Benzol.

Das Lösemittel liegt bevorzugt in einer Menge von 10 - 40 Gew.-%, bezogen auf das Gesamtgewicht der härtbaren Zusammensetzung, vor, besonders bevorzugt in einer Menge von 10 - 30 Gew.-%. Vorzugsweise handelt es sich bei dem Lösemittel, das bereits bei der Herstellung des silylierten Polyurethans zugesetzt wird. Es ist aber auch möglich, dass das oder die Lösemittel ganz oder teilweise erst bei der Herstellung der härtbaren Zusammensetzung zugegeben werden. Besonders bevorzugt enthält die härtbare Zusammensetzung 10 - 40 Gew.-%, vorzugsweise 10 - 30 Gew.-%, mindestens eines C₁₀-C₂₀-Alkyl-substituierten Benzols.

Es kann nötig sein, zur Einstellung der elastischen Eigenschaften und zur Verbesserung der Verarbeitbarkeit der Zusammensetzung einen oder mehrere weitere bekannte Weichmacher zuzusetzen. Unter einem Weichmacher wird eine Substanz verstanden, welche die Viskosität der Zusammensetzung verringert und damit die Verarbeitbarkeit erleichtert und darüber hinaus Flexibilität und Dehnungsvermögen der Zusammensetzungen verbessert.

Der Weichmacher ist bevorzugt ausgewählt aus einem Fettsäureester, einem Dicarbonsäureester (Cyclohexandicarbonsäuredialkylester ausgenommen), einem Ester OH-Gruppen tragender oder epoxidierter Fettsäuren, einem Fett, einem Glykolsäureester, einem Benzoesäureester, einem Phosphorsäureester, einem Sulfonsäureester, einem Trimellithsäureester, einem epoxidierten Weichmacher, einem Polyether-Weichmacher, einem Polystyrol, einem Kohlenwasserstoff-Weichmacher und einem chlorierten Paraffin, sowie Gemischen aus zwei oder mehr davon. Durch die gezielte Auswahl eines dieser Weichmacher oder einer spezifischen Kombination können weitere vorteilhafte Eigenschaften der erfindungsgemäßen Zusammensetzung, zum Beispiel Geliervermögen der Polymere, Kälteelastizität beziehungsweise Kältebeständigkeit oder auch antistatische Eigenschaften realisiert werden.

Von den Polyether-Weichmachern werden bevorzugt endgruppenverschlossene Polyethylenglykole eingesetzt, beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon. Ebenfalls als Weichmacher geeignet sind beispielsweise Ester der Abietinsäure, Buttersäureester, Essigsäureester, Propionsäureester, Thiobuttersäureester, Zitronensäureester sowie Ester auf Nitrocellulose- und Polyvinylacetat-Basis, sowie Gemische aus zwei oder mehr davon. Geeignet sind beispielsweise auch die asymmetrischen Ester von Adipinsäuremonooctylester mit 2-Ethylhexanol (Edenol DOA, Fa. Cognis Deutschland GmbH, Düsseldorf). Darüber hinaus sind als Weichmacher geeignet die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether. Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Grundsätzlich können auch Phthalsäureester als Weichmacher eingesetzt werden, diese werden jedoch aufgrund ihres toxikologischen Potentials nicht bevorzugt.

Eine für bestimmte Anwendungen zu hohe Viskosität der erfindungsgemäßen Zusammensetzung kann auch durch Verwendung eines Reaktivverdünners auf einfache und zweckmäßige Weise verringert werden, ohne dass es zu einer Entmischung (zum Beispiel Weichmacherwanderung) in der ausgehärteten Masse kommt. Vorzugsweise weist der Reaktivverdünner mindestens eine funktionelle Gruppe auf, die nach der Applikation zum Beispiel mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme. Als Reaktivverdünner kann man alle Verbindungen, die mit der erfindungsgemäßen Zusammensetzung unter Verringerung der Viskosität mischbar sind und über mindestens eine mit dem Bindemittel reaktive Gruppe verfügen, allein oder als Kombination mehrerer Verbindungen einsetzen. Die Viskosität des Reaktivverdünners beträgt bevorzugt weniger als 20.000 mPas, besonders bevorzugt etwa 0,1 - 6.000 mPas, ganz besonders bevorzugt 1- 1000 mPas (Brookfield RVT, 23 °C, Spindel 7, 10 U/min).

Als Reaktivverdünner lassen sich beispielsweise folgende Stoffe einsetzen: mit Isocyanatosilanen umgesetzte Polyalkylenglykole (zum Beispiel Synalox 100-50B, DOW), Alkyltrimethoxysilan, Alkyltriethoxysilan, wie Methyltrimethoxysilan, Methyltriethoxysilan sowie Vinyltrimethoxysilan (XL 10, Wacker), Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen. Ferner sind ebenfalls folgende Polymere von Kaneka Corp. als Reaktivverdünner einsetzbar: MS S203H, MS S303H, MS SAT 010, und MS SAX 350. Weiterhin als Reaktivverdünner geeignet sind Polymere, die aus einem organischen Grundgerüst durch Pfropfen mit einem Vinylsilan oder durch Umsetzung von Polyol, Polyisocyanat und Alkoxysilan herstellbar sind.

Zu den für die Herstellung von Polyalkylenglykolen, die im Sinne des vorstehenden Absatzes weiter zu Reaktivverdünnern umgesetzt werden können, geeigneten aliphatischen Alkoholen zählen beispielsweise Ethylenglykol, Propylenglykol und höhere Glykole, sowie andere polyfunktionelle Alkohole. Die Polyole können zusätzlich weitere funktionelle Gruppen wie zum Beispiel Ester, Carbonate, Amide enthalten. Zur Herstellung eines Reaktivverdünners durch Umsetzung von Polyol mit Polyisocyanat und Alkoxysilan wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen bevorzugt.

Unter den Alkoxysilylgruppen sind die Di- und Trialkoxysilylgruppen bevorzugt.

Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4-und 2,6-Hexahydrotoluylendiisocyanat, Hexahydro-1,3- oder-1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bisisocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate.

Ebenso kann man als Polyisocyanate drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Die erfindungsgemäße Zusammensetzung kann außerdem einen Haftvermittler umfassen. Unter einem Haftvermittler wird eine Substanz verstanden, die die Haftungseigenschaften von Klebeschichten auf Oberflächen verbessert. Es können übliche, dem Fachmann bekannte Haftvermittler (Tackifier) allein oder als Kombination mehrerer Verbindungen eingesetzt werden. Geeignet sind beispielsweise Harze, Terpen-Oligomere, Cumaron-/lnden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich α- od. β-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden auch Copolymere aus Terpenen und anderen Monomeren, beispielsweise Styrol, *α*-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Haftvermittler im oben genannten Sinne geeignet sind die Kolophoniumharze und deren Derivate, beispielsweise deren Ester oder Alkohole. Besonders gut geeignet sind Silan-Haftvermittler, insbesondere Aminosilane.

In einer speziellen Ausführungsform der erfindungsgemäßen härtbaren Zusammensetzung umfasst die Zusammensetzung ein Silan der allgemeinen Formel (II)

R¹R²N-R³-SiXYZ (II)

als Haftvermittler, worin
R¹ und R² unabhängig voneinander Wasserstoff oder C₁ - C₈ -Alkylreste,
R³ ein zweibindiger gegebenenfalls ein Heteroatom enthaltender Kohlenwasserstoffrest mit 1 - 12 C-Atomen, und
X, Y, Z jeweils unabhängig voneinander C₁ - C₈ - Alkyl-, C₁ - C₈ - Alkoxy- oder C₁ - C₈ - Acyloxyreste sind, wobei mindestens einer der Reste X, Y, Z eine C₁ - C₈ - Alkoxy- oder C₁ - C₈ - Acyloxygruppe ist. Derartige Verbindungen weisen naturgemäß eine hohe Affinität zu den bindenden Polymerkomponenten der erfindungsgemäßen härtbaren Zusammensetzung, aber auch zu einer großen Bandbreite an polaren sowie unpolaren Oberflächen auf und tragen deshalb zur Ausbildung einer besonders stabilen Haftung zwischen der Klebstoffzusammensetzung und den jeweils zu verklebenden Substraten bei.

Bei der Bindegruppe R³ kann es sich beispielsweise um einen geradkettigen oder verzweigten oder cyclischen, substituierten oder unsubstituierten Alkylenrest handeln. Gegebenenfalls ist als Heteroatom darin Stickstoff (N) oder Sauerstoff (O) enthalten. Wenn X, Y und/oder Z eine Acyloxygruppe sind, kann dies zum Beispiel die Acetoxygruppe -OCO-CH₃ sein.

Ein oder mehrere Haftvermittler ist/sind bevorzugt zu 0,1 bis 5 Gew.-%, stärker bevorzugt zu 0,2 bis 2 Gew.-%, insbesondere zu 0,3 bis 1 Gew.-%, jeweils bezogen auf das Gesamtgewicht der Zusammensetzung, in der erfindungsgemäßen härtbaren Zusammensetzung enthalten.

Als Füllstoffe für die erfindungsgemäße Zusammensetzung eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Sand, Quartz, Flint, Glimmer, Glaspulver und andere gemahlene Mineralstoffe.

Weiterhin können auch organische Füllstoffe eingesetzt werden, insbesondere Ruß, Graphit, Holzfasern, Holzmehl, Sägespäne, Zellstoff, Baumwolle, Pulpe, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet. Darüber hinaus eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis sind beispielsweise unter den Bezeichnungen Expancel® oder Dualite® kommerziell erhältlich. Diese sind aus anorganischen oder organischen Stoffen zusammengesetzt, jede mit einem Durchmesser von 1 mm oder weniger, bevorzugt von 500 µm oder weniger. Für manche Anwendungen sind Füllstoffe bevorzugt, die den Zubereitungen Thixotropie verleihen. Solche Füllstoffe werden auch als rheologische Hilfsmittel beschrieben, zum Beispiel hydrogenisiertes Rizinusöl, Fettsäureamide oder quellbare Kunststoffe wie PVC. Damit sie gut aus einer geeigneten Dosiervorrichtung (zum Beispiel Tube) ausgepresst werden können, besitzen solche Zubereitungen eine Viskosität von 3.000 bis 15.000, vorzugsweise 4.000 bis 8.000 mPas oder auch 5.000 bis 6.000 mPas.

Die Füllstoffe werden vorzugsweise in einer Menge von 1 bis 80 Gew.-%, stärker bevorzugt von 10 bis 70 Gew.-%, beispielsweise von 20 bis 60 Gew.-%, insbesondere von 35 bis 55 Gew.-%, bezogen auf das Gesamtgewicht der erfindungsgemäßen Zusammensetzung, eingesetzt. Es kann ein einzelner Füllstoff oder eine Kombination mehrerer Füllstoffe verwendet werden.

Beispielsweise wird als Füllstoff eine hochdisperse Kieselsäure mit einer BET-Oberfläche von 10 bis 500 m²/g eingesetzt. Bei ihrer Verwendung bewirkt eine derartige Kieselsäure keine wesentliche Erhöhung der Viskosität der erfindungsgemäßen Zusammensetzung, trägt aber zu einer Verstärkung der gehärteten Zubereitung bei. Über diese Verstärkung werden zum Beispiel die Anfangsfestigkeiten, Zugscherfestigkeiten und die Adhäsion der Kleb-, Dicht- oder Beschichtungsstoffe, in denen die erfindungsgemäße Zusammensetzung verwendet wird, verbessert. Bevorzugt werden ungecoatete Kieselsäuren mit einer BET-Oberfläche von kleiner als 100, stärker bevorzugt von kleiner als 65 m²/g, und/oder gecoatete Kieselsäuren mit einer BET-Oberfläche 100 bis 400, stärker bevorzugt von 100 bis 300, insbesondere von 150 bis 300 und ganz besonders bevorzugt von 200 bis 300 m²/g eingesetzt.

Als Zeolithe werden bevorzugt Alkali-Alumosilikate eingesetzt, beispielsweise Natrium-Kalium-Alumosilikate der allgemeinen Summenformel aK₂O*bNa₂O*Al₂O₃*2SiO*nH₂O mit 0 < a, b < 1 und a + b = 1. Vorzugsweise ist die Porenöffnung des eingesetzten Zeoliths beziehungsweise der eingesetzten Zeolithe gerade groß genug, um Wassermoleküle aufzunehmen. Dementsprechend ist eine effektive Porenöffnung der Zeolithe von weniger als 0,4 nm bevorzugt. Besonders bevorzugt beträgt die effektive Porenöffnung 0,3 nm ± 0,02 nm. Der/die Zeolith(e) wird/werden vorzugsweise in Form eines Pulvers eingesetzt.

Bevorzugt wird Kreide als Füllstoff verwendet. Als Kreide können dabei kubische, nicht kubische, amorphe und andere Modifikationen von Calciumcarbonat eingesetzt werden. Vorzugsweise sind die eingesetzten Kreiden oberflächenbehandelt beziehungsweise beschichtet. Als Beschichtungsmittel werden bevorzugt Fettsäuren, Fettsäureseifen und Fettsäureester eingesetzt, beispielsweise Laurinsäure, Palmitinsäure oder Stearinsäure, Natrium- oder Kaliumsalze solcher Säuren oder ihre Alkylester. Darüber hinaus kommen aber auch andere oberflächenaktive Substanzen wie Sulfatester langkettiger Alkohole oder Alkylbenzolsulfonsäuren beziehungsweise deren Natrium- oder Kaliumsalze oder auch Kopplungsreagenzien auf der Basis von Silanen oder Titanaten in Frage. Mit der Oberflächenbehandlung der Kreiden ist häufig eine Verbesserung der Verarbeitbarkeit sowie der Klebkraft und auch der Wetterresistenz der Zusammensetzungen verbunden. Das Beschichtungsmittel wird üblicherweise in einem Anteil von 0,1 bis 20 Gew.%, bevorzugt 1 bis 5 Gew.%, bezogen auf das Gesamtgewicht der Rohkreide, eingesetzt.

Je nach angestrebtem Eigenschaftsprofil können gefällte oder gemahlene Kreiden oder Gemische davon verwendet werden. Gemahlene Kreiden können zum Beispiel aus natürlichem Kalk, Kalkstein oder Marmor durch mechanisches Zermahlen hergestellt werden, wobei trockene oder feuchte Methoden zur Anwendung gelangen können. Je nach Mahlverfahren werden Fraktionen mit unterschiedlicher durchschnittlicher Teilchengröße erhalten. Vorteilhafte spezifische Oberflächenwerte (BET) liegen zwischen 1,5 m²/g und 50 m²/g_{.}

Ferner kann die erfindungsgemäße Zusammensetzung Antioxidantien enthalten. Vorzugsweise beträgt der Anteil der Antioxidantien an der erfindungsgemäßen Zusammensetzung bis zu 7 Gew.-%, insbesondere bis zu 5 Gew.-%, jeweils bezogen auf das Gesamtgewicht der Zusammensetzung. Die erfindungsgemäße Zusammensetzung kann darüber hinaus UV-Stabilisatoren enthalten. Vorzugsweise beträgt der Anteil der UV-Stabilisatoren an der erfindungsgemäßen Zusammensetzung bis zu 2 Gew.-%, insbesondere bis zu 1 Gew.-%. Als UV-Stabilisatoren besonders geeignet sind die so genannten Hindered Amine Light Stabilisators (HALS). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden.

Häufig ist es sinnvoll, die erfindungsgemäße Zusammensetzung weiter gegenüber eindringender Feuchtigkeit zu stabilisieren, um die Lagerfähigkeit (shelf-life) noch stärker zu erhöhen. Eine solche Verbesserung der Lagerfähigkeit lässt sich beispielsweise durch den Einsatz von Trockenmitteln erreichen. Als Trockenmittel eignen sich alle Verbindungen, die mit Wasser unter Bildung einer gegenüber den in der Zusammensetzung vorliegenden reaktiven Gruppen inerten Gruppe reagieren, und hierbei möglichst geringe Veränderungen ihres Molekulargewichts erfahren. Weiterhin muss die Reaktivität der Trockenmittel gegenüber in die Zusammensetzung eingedrungener Feuchtigkeit höher sein als die Reaktivität der Endgruppen des in der Zusammensetzung vorliegenden erfindungsgemäßen Silyl-Gruppen tragenden Polymers. Als Trockenmittel eignen sich beispielsweise Isocyanate.

Vorteilhaft werden als Trockenmittel auch Silane eingesetzt, beispielsweise Vinylsilane wie 3-Vinylpropyltriethoxysilan, Oximsilane wie Methyl-O,O',O"-butan-2-on-trioximosilan oder O,O',O",O'''-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder -ethylethoxysilan ist möglich. Besonders bevorzugt sind hier Vinyltrimethoxysilan und Tetraethoxysilan hinsichtlich Effizienz und Kosten. Ebenfalls als Trockenmittel geeignet sind die oben genannten Reaktivverdünner, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer, ist als die Reaktivität der reaktiven Gruppen des erfindungsgemäßen Silyl-Gruppen tragenden Polymers. Schließlich können als Trockenmittel auch Alkylorthoformiate oder -orthoacetate eingesetzt werden, beispielsweise Methyl- oder Ethylorthoformiat, Methyl- oder Ethylorthoacetat. Die erfindungsgemäße Zusammensetzung enthält vorzugsweise 0,01 bis 10 Gew.-% Trockenmittel, bezogen auf das Gesamtgewicht der Zusammensetzung.

Vorzugsweise enthält die erfindungsgemäße Zusammensetzung folgende Bestandteile in den angegebenen Gewichtsanteilen:

| | |
|---|---|
| erfindungsgemäßes silyliertes Polyurethan | 10 - 40 Gew.-% |
| Lösemittel | 10 - 30 Gew.-% |
| Füllstoff | 20 - 60 Gew.-% |
| Härtungskatalysator | 0,01 - 1 Gew.-% |
| Hilfsstoffe | 0-10 Gew.-%, |

wobei sich die Gewichtsanteile zu 100 Gew.-% addieren und auf das Gesamtgewicht der härtbaren Zusammensetzung bezogen sind. Die vorstehend verwendeten Bezeichnungen "Lösemittel", "Füllstoff", und "Härtungskatalysator" umfassen jeweils auch ein Gemisch verschiedener Lösemittel, Füllstoffe und/oder Härtungskatalysatoren.

Als Hilfsstoffe kann die erfindungsgemäße Zusammensetzung über die bereits aufgeführten Bestandteile hinaus beispielsweise Stabilisatoren, UV-Stabilisatoren, Alterungsschutzmittel, rheologische Hilfsmittel, Farbpigmente oder Farbpasten, Fungizide und/oder Flammschutzmittel enthalten.

Die Herstellung der erfindungsgemäßen Zusammensetzung erfolgt nach bekannten Verfahren durch inniges Vermischen der Bestandteile in geeigneten Dispergieraggregaten, zum Beispiel einem Schnellmischer.

Ein weiterer Gegenstand der vorliegenden Erfindung ist die Verwendung der erfindungsgemäßen härtbaren Zusammensetzung als Kleb-, Dicht- und/oder Beschichtungsstoff.

Grundsätzlich können in der vorliegenden Erfindung alle im Rahmen des vorliegenden Textes aufgeführten Merkmale, insbesondere die als bevorzugt und/oder speziell ausgewiesenen Ausführungsformen, Anteilsbereiche, Bestandteile und sonstigen Merkmale der erfindungsgemäßen Zusammensetzung und der erfindungsgemäßen Verwendungen in allen möglichen und sich nicht gegenseitig ausschließenden Kombinationen verwirklicht sein, wobei Kombinationen von als bevorzugt und/oder speziell ausgewiesenen Merkmalen ebenfalls als bevorzugt und/oder speziell angesehen werden.

## Patentansprüche

1. Verfahren zur Herstellung eines silylierten Polyurethans, umfassend die folgenden Schritte:
(1) Umsetzen
mindestens eines Polyetherpolyols mit einem zahlenmittleren Molekulargewicht von mindestens 5.000 g/mol (bestimmt wie in der Anmeldung angegeben) mit mindestens einem Polyisocyanat in Gegenwart mindestens eines Lösemittels;
(2) Umsetzen
des Reaktionsproduktes aus Schritt (1) mit mindestens einem Silan der Formel (I)
A-R-SiXYZ (I),
worin A -NH₂ oder -NHB bedeutet, wobei B für einen verzweigten oder linearen Alkylrest mit 1 - 12 C-Atomen, einen linearen, funktionelle Gruppen aufweisenden Alkylrest mit 1 - 12 C-Atomen, einen cyclischen Alkylrest mit 5 - 8 C-Atomen, oder einen Arylrest steht,
und
R ein zweibindiger Kohlenwasserstoffrest mit 1 - 12 C-Atomen ist und
X, Y, Z Substituenten am Si-Atom und unabhängig voneinander C₁ - C₈ - Alkyl-, C₁ - C₈ - Alkoxy- oder C₁ - C₈ - Acyloxygruppen sind, wobei mindestens einer der Reste X, Y, Z eine C₁ - C₈ - Alkoxy- oder C₁ - C₈ - Acyloxygruppe ist,
in Gegenwart mindestens eines Lösemittels,
wobei das Lösemittel eine aromatische Verbindung ist.

2. Verfahren gemäß Anspruch 1, **dadurch gekennzeichnet, dass** das Polyetherpolyol ein zahlenmittleres Molekulargewicht von 5.000 bis 15.000 g/mol aufweist.

3. Verfahren gemäß Anspruch 1, **dadurch gekennzeichnet, dass** das Polyetherpolyol ein zahlenmittleres Molekulargewicht von 16.000 bis 30.000 g/mol aufweist.

4. Verfahren gemäß mindestens einem der vorstehenden Ansprüche, **dadurch gekennzeichnet, dass** das Lösemittel ein C₁₀-C₂₀-Alkyl-substituiertes Benzol ist.

5. Verfahren gemäß mindestens einem der vorstehenden Ansprüche, **dadurch gekennzeichnet, dass** R in der Formel (I) eine Methylen-, Ethylen- oder n-Propylen-Gruppe ist.

6. Solvatisiertes silyliertes Polyurethan, hergestellt durch ein Verfahren gemäß mindestens einem der vorstehenden Ansprüche.

7. Härtbare Zusammensetzung, enthaltend die nachfolgend aufgeführten Bestandteile in den entsprechenden Gewichtsanteilen:
| | |
|---|---|
| - silyliertes Polyurethan hergestellt durch ein Verfahren gemäß mindestens einem der Ansprüche 1 bis 5 | 10 - 40 Gew.-% |
| - Lösemittel | 10 - 30 Gew.-% |
| - Füllstoff | 20 - 60 Gew.-% |
| - Härtungskatalysator | 0,01 - 1 Gew.-% |
| - Hilfsstoffe | 0 - 10 Gew.-%, |
wobei sich die Gewichtsanteile zu 100 Gew.-% addieren und auf das Gesamtgewicht der härtbaren Zusammensetzung bezogen sind.

8. Härtbare Zusammensetzung gemäß Anspruch 7, **dadurch gekennzeichnet, dass** der Füllstoff Calciumcarbonat ist.

9. Verwendung einer härtbaren Zusammensetzung gemäß Anspruch 7 oder 8 als Kleb-, Dicht- und/oder Beschichtungsstoff.

## Claims

1. A method for preparing a silylated polyurethane comprising the following steps:
(1) reacting at least one polyether polyol having a number-average molecular weight of at least 5,000 g/mol (as specified in the application) with at least one polyisocyanate in the presence of at least one solvent;
(2) reacting the reaction product from step (1) with at least one silane of formula (I)
A-R-SiXYZ (I),
in which A is -NH₂ or -NHB, wherein B represents a branched or linear alkyl group having 1-12 C atoms, a linear alkyl group having functional groups and 1-12 C atoms, a cyclic alkyl group having 5-8 C atoms, or an aryl group,
and
R is a divalent hydrocarbon group having 1-12 C atoms and X, Y and Z are substituents on the Si atom and, independently of one another, C₁-C₈ alkyl, C₁-C₈ alkoxy or C₁-C₈ acyloxy groups, wherein at least one of the groups X, Y and Z is a C₁-C₈ alkoxy or C₁-C₈ acyloxy group, in the presence of at least one solvent,
wherein the solvent is an aromatic compound.

2. The method according to claim 1, **characterized in that** the polyether polyol has a number-average molecular weight of from 5,000 to 15,000 g/mol.

3. The method according to claim 1, **characterized in that** the polyether polyol has a number-average molecular weight of from 16,000 to 30,000 g/mol.

4. The method according to at least one of the preceding claims, **characterized in that** the solvent is a C₁₀-C₂₀ alkyl-substituted benzene.

5. The method according to at least one of the preceding claims, **characterized in that** R in formula (I) is a methylene group, ethylene group or n-propylene group.

6. A solvated silylated polyurethane prepared by a method according to at least one of the preceding claims.

7. A curable composition containing the following ingredients in the corresponding weight proportions:
| | |
|---|---|
| - silylated polyurethane prepared by a method according to at least one of claims 1 to 5 | 10 - 40 wt.% |
| - solvent | 10 - 30 wt.% |
| - filler | 20 - 60 wt.% |
| - curing catalyst | 0.01 - 1 wt.% |
| - auxiliaries | 0 - 10 wt.%, |
wherein the weight proportions add up to 100 wt.% and are based on the total weight of the curable composition.

8. The curable composition according to claim 7, **characterized in that** the filler is calcium carbonate.

9. The use of a curable composition according to claim 7 or 8 as an adhesive, sealing and/or coating material.

## Revendications

1. Procédé de préparation d'un polyuréthane silylé comprenant les étapes suivantes :
(1) réaction d'au moins un polyétherpolyol ayant un poids moléculaire moyen en nombre d'au moins 5 000 g/mol (déterminé selon les spécifications de la demande), avec au moins un polyisocyanate en présence d'au moins un solvant ;
(2) réaction du produit de réaction de l'étape (1) avec au moins un silane de formule (I)
A-R-SiXYZ (I),
dans laquelle A représente -NH₂ ou -NHB, B représente un radical alkyle ramifié ou linéaire ayant 1 à 12 atomes de carbone, un radical alkyle linéaire ayant 1 à 12 atomes de carbone présentant des groupes fonctionnels, un radical alkyle cyclique ayant 5 à 8 atomes de carbone, ou un radical aryle, et R représente un radical hydrocarboné divalent ayant 1 à 12 atomes de carbone et X, Y et Z représentent des substituants sur l'atome de Si et représentent indépendamment des groupes alkyle Ci-Cs, alcoxy Ci-Cs ou acyloxy Ci-Cs, au moins l'un des radicaux X, Y et Z étant un groupe alcoxy Ci-Cs ou acyloxy Ci-Cs, en présence d'au moins un solvant,
le solvant étant un composé aromatique.

2. Procédé selon la revendication 1, **caractérisé en ce que** le polyétherpolyol a un poids moléculaire moyen en nombre compris entre 5 000 et 15 000 g/mol.

3. Procédé selon la revendication 1, **caractérisé en ce que** le polyétherpolyol a un poids moléculaire moyen en nombre compris entre 16 000 et 30 000 g/mol.

4. Procédé selon au moins l'une des revendications précédentes, **caractérisé en ce que** le solvant est un benzène substitué par un alkyle C₁₀-C₂₀.

5. Procédé selon au moins l'une des revendications précédentes, **caractérisé en ce que** R dans la formule (I) est un groupe méthylène, éthylène ou n-propylène.

6. Polyuréthane silylé solvaté préparé par un procédé selon au moins l'une des revendications précédentes.

7. Composition durcissable contenant les constituants suivants dans les proportions en poids correspondantes :
| | |
|---|---|
| - un polyuréthane silylé préparé par un procédé selon au moins l'une des revendications 1 à 5 | 10 à 40 % en poids |
| - un solvant | 10 à 30 % en poids |
| - une charge | 20 à 60 % en poids |
| - un catalyseur de durcissement | 0,01 à 1 % en poids |
| - des adjuvants | 0 à 10 % en poids, |
les proportions en poids s'additionnant à 100 % en poids et étant basées sur le poids total de la composition durcissable.

8. Composition durcissable selon la revendication 7, **caractérisée en ce que** la charge est du carbonate de calcium.

9. Utilisation d'une composition durcissable selon la revendication 7 ou 8 comme adhésif, matériau d'étanchéité et/ou de revêtement.
